# EUROPÄISCHE PATENTSCHRIFT

(11) **EP 4 306 489 B1**
(45) Veröffentlichungstag und Bekanntmachung des Hinweises auf die Patenterteilung: **04.03.2026**
(21) Anmeldenummer: 23182614.0
(22) Anmeldetag: 30.06.2023
(51) Int. Cl.: C03B 5/03

(54) **GLASSCHMELZWANNE ZUM VOLLELEKTRISCHEN BETRIEB**
GLASS MELTING TANK FOR FULL ELECTRIC OPERATION
CUVE DE FUSION DE VERRE POUR FONCTIONNEMENT TOUT ÉLECTRIQUE

(30) Priorität: 15.07.2022 DE 202022104018 U
(43) Veröffentlichungstag der Anmeldung: 17.01.2024
(73) Patentinhaber: Horn Glass Industries AG, 95703 Plößberg (DE)
(72) Erfinder: Biennek, Lars, 92637 Weiden (DE); Kallert, Max, 91462 Dachsbach (DE); Wintzer, Wolfram, 07749 Jena (DE)
(74) Vertreter: Lindner Blaumeier Patent- und Rechtsanwälte

(56) Entgegenhaltungen:
- CN-A- 112 830 661
- US-A- 4 693 740

## Beschreibung

Die Erfindung betrifft eine Glasschmelzwanne zum vollelektrischen Betrieb, aufweisend einen Prozessbereich für ein Glasbad, welcher einen rechteckigen, durch eine Breite und eine Tiefe gekennzeichneten Querschnitt in der Horizontalen und eine Höhe, bis zu der das Glasbad vorgesehen ist, aufweist, eine in den Prozessbereich einragende Elektrodenanordnung und eine in einem unteren Anteil des Prozessbereichs vorgesehene Auslassöffnung.

Glasschmelzwannen, die kontinuierlich betrieben werden können, sind im Stand der Technik seit langem bekannt. Nachdem klassisch eher fossile Brennstoffe, beispielsweise Gas, zur Beheizung eingesetzt wurden, richtet sich das Interesse für viele Anwendungsfälle zurzeit auf eine vollelektrische Beheizung. Eine solche, sogenannte vollelektrische Glasschmelzwanne wird während des Betriebs ausschließlich durch eine direkte elektrische Widerstandsheizung betrieben, welche durch eine Elektrodenanordnung bereitgestellt wird. Die Elektroden tauchen in das Glasbad mit der Glasschmelze ein, wobei ausgenutzt wird, dass diese eine elektrische Leitfähigkeit aufweist. So fließt mithin mittels der Elektroden ein Strom durch die Glasschmelze, um die elektrische Beheizung zu erreichen. Beispielhafte Materialien für die Elektroden einer solchen Elektrodenanordnung sind Molybdän, Wolfram, Zinnoxid oder Platin.

Hierbei wurden im Stand der Technik auch bereits Glasschmelzwannen vorgeschlagen, die vollelektrisch betrieben sind und in denen der Verarbeitungsprozess bis zum Erhalt weiterverarbeitbaren Glases in seinen Hauptschritten vollständig durchlaufen wird. Dabei ist es beispielsweise bekannt, das Gemenge, aus dem das möglichst homogene, flüssige Gas, insbesondere mit einer bestimmten Viskosität, hergestellt werden soll, als Rohstoffe von oben her in die Glasschmelzwanne einzugeben, wo diese als von oben erste Schicht des insgesamten Glasbads eine Rohstoffdecke bilden. Die Elektroden, welche insbesondere von oben in den Prozessbereich für das Glasbad einragen, erhitzen die unter der Gemengeschicht angeordnete Mischung, sodass in diesem oberen Teil des Prozessbereichs die Umwandlung in Glas stattfinden kann. Nachdem verbliebene Gasblasen bei idealer Einstellung des Prozesses leichter aufsteigen als die Glasschmelze zur Auslassöffnung absinkt, findet auch eine Läuterung statt, in deren Rahmen auch eine Homogenisierung durch verschiedene Bewegungsprozesse stattfindet. Das fertige, flüssige Glas kann durch eine im unteren Teil befindliche Auslassöffnung abgezogen werden. Hierbei sind im Bereich gängiger Tonnagen Glasschmelzwannen runder Bauform bekannt geworden.

Entwicklungsbestrebungen versuchen, Wannenkonzepte für Rechteckwannen als vollelektrische Glasschmelzwannen zu entwickeln, welche hinsichtlich der Bauform, der Flexibilität und auch der verarbeitbaren Tonnagen Vorteile mit sich bringen. Dabei wurde beispielsweise eine mit einer hohen Tonnage arbeitende vollelektrische Glasschmelzwanne rechteckiger Bauform vorgeschlagen, die eine hohe Breite und Tiefe aufweist, jedoch eine geringe Höhe von etwa einem Meter. Dabei haben sich jedoch massive Probleme beim Betrieb gezeigt, beispielsweise ein instabiler Prozess und eine Produktion von flüssigem Glas niedriger Qualität.

US4693740 A offenbart einen elektrisch beheizten Glasofen mit einer Länge von 1,2 m, einer Tiefe der Glasschmelze von 0,75 m (Verhältnis 1,6) und einer Auslassöffnung im unteren Bereich. Die Elektroden zur elektrischen Beheizung ragen von unten in den Ofen bis in den oberen Bereich der Glasschmelze. Brenner sind in einem separaten Läuterbereich optional vorhanden.

CN112830661 A lehrt einen Glasofen. Der Homogenisierungsbereich ist 2550-2555 mm lang und die Glasschmelze hat eine Tiefe von 960 mm oder mehr. Am Boden des Homogenisierungsbereichs ist ein Auslass für die Glasschmelze. Die Beheizung des Ofens erfolgt über Brenner und Elektrodensteine.

Der Erfindung liegt daher die Aufgabe zu Grunde, eine demgegenüber verbesserte, insbesondere zur Herstellung von Glas verschiedener Qualitätsanforderungen geeignete, stabil betriebsfähige, rechteckige und vollelektrische Glasschmelzwanne anzugeben.

Zur Lösung dieser Aufgabe ist erfindungsgemäß gemäß Anspruch 1 eine Glasschmelzwanne zum vollelektrischen Betrieb vorgesehen, welche aufweist:
- einen Prozessbereich für ein Glasbad, welcher einen rechteckigen, durch eine Breite und eine Tiefe gekennzeichneten Querschnitt in der horizontalen und eine Höhe, bis zu der das Glasbad vorgesehen ist, aufweist,
- eine insbesondere von oben in den Prozessbereich einragende, in einem oberen Anteil des Prozessbereichs wirkende obere Elektrodenanordnung mit wenigstens einem Paar von sich in Tiefenrichtung gegenüberliegenden Elektroden, und
- eine in einem unteren Anteil des Prozessbereichs vorgesehene Auslassöffnung,
- wobei das Verhältnis der Tiefe des Prozessbereichs zu der Höhe des Prozessbereichs im Bereich von 1,2 : 1 bis 3 : 1 liegt.

Der Erfindung liegt also die Erkenntnis zu Grunde, dass die Verhältnisse von Dimensionen, insbesondere der Tiefe zu der Höhe, wesentliche Relevanz für die Stabilität des ablaufenden Prozesses und des entstehenden Endprodukts, also der Glasschmelze, die durch die Auslassöffnung abgezogen wird, hat. Die Tiefenrichtung entspricht dabei derjenigen, in der sich (unterschiedlich gepolte) Elektroden eines Paares der Elektrodenanordnung gegenüberliegen, insbesondere jeweils nahe der Wand der Glasschmelzwanne angeordnet. Der Betrieb der Elektroden zur Beheizung führt zu gewissen Strömungen und Bewegungen innerhalb des Glasbades, insbesondere durch Konvektion. Dabei ist es gewünscht, dass diese den Schmelzprozess und die Umwandlung der Rohstoffe, also des Gemenges, welches von oben aufgegeben wird, in die Glasschmelze fördern, idealerweise, wie Untersuchungen gezeigt haben, indem beispielsweise einzelne Rohstoffpartikel den oberen, durch die Elektrodenanordnung beheizten Anteil des Prozessbereichs mehrfach durchlaufen. Im unteren Anteil des Prozessbereichs ist jedoch eine Beruhigung des Glasbads gewünscht, insbesondere, damit verbliebene Gasblasen zum Zwecke einer Läuterung aufsteigen können und ein Abzug einer homogenisierten Glasschmelze als Produkt möglich wird.

Dabei hat sich gezeigt, dass sowohl die Tiefe als auch die Höhe des Glasbades, mithin des Prozessbereichs, und deren Verhältnis eine wesentliche Rolle spielen, wobei zudem beide Parameterbereiche technische Grenzen aufweisen können. So kann beispielsweise bei zunehmender Tiefe auch der Abstand zwischen den Elektroden zunehmen, was zu einer Vertiefung des entstehenden, insbesondere durch Konvektion gebildeten Strömungsmusters und zu einer Veränderung der Temperaturverteilung führen kann, wobei es auch vorkommen kann, dass zusätzliche Strömungsbereiche hinzukommen. Gleichzeitig bestimmt die Glasbadhöhe das Verbleiben des unteren Anteils sowie dessen Wirkung (Läuterung, Homogenisierung/Durchmischung), wie in Anspruch 1 definiert.

Durch Analysen von verschiedenen Größenausgestaltungen mittels Beobachtungen und analytischen Ansätzen ist es im Rahmen der Erfindung nun gelungen, ein Verhältnis von Tiefe zu Höhe des Prozessbereichs, mithin des Glasbads, festzustellen, welches qualitativ hochwertige Produktergebnisse zur Folge hat. Optimierende Betrachtungen, insbesondere unter Verwendung von Simulationen, lieferten das Ergebnis, dass Qualitätskennzahlen optimiert werden können, wenn das Verhältnis der Tiefe zur Höhe des Prozessbereichs für das Glasbad 1,3 : 1 bis 1,4 : 1, insbesondere 1,375 : 1 ist. Hierbei wurden auf die Verweilzeit, den Blasenaufstieg, die Sandauflösung und die Vermischung bezogene Qualitätskennzahlen optimiert, die für die Qualität sowohl des Prozesses selbst, insbesondere hinsichtlich seiner Stabilität, als auch des Produktes, also der abzuziehenden Glasschmelze, kennzeichnend sind. Dabei existieren unterschiedliche Möglichkeiten, Kennzahlen zu definieren, beispielsweise beschreibend, dass Gasblasen aufsteigen statt absteigen und Sandkörner beziehungsweise sonstige Feststoffkörper des Gemenges vollständig aufgelöst werden, wofür beispielsweise in einer Simulation Blasen beziehungsweise Körner nachverfolgt werden können. Bezüglich der Durchmischung kann beispielsweise eine entsprechende Beobachtung von Schlierenbildnern stattfinden.

Es hat sich gezeigt, dass in dem genannten Bereich von 3 : 1 bis 1,2 : 1 bei hinreichender aufrechterhaltener Qualität und Stabilität des Prozesses, je nach Anwendung, insbesondere aber im Bereich von 1,4 : 1 bis 1,3 : 1, als physikalischer Effekt beobachtet werden kann, dass sich die Temperatur in der Glasschmelzwanne, insbesondere im unteren Anteil des Prozessbereichs, absenken lässt und es zu einer Beruhigung der Strömung insbesondere im unteren Anteil mit positiven Auswirkungen auf die Läuterung kommt. Hieraus ergeben sich unmittelbar eine Vielzahl von Vorteilen.

So wird die Korrosion der Glasschmelzwanne vermindert, was zu einer deutlichen Steigerung der Lebensdauer der Wanne führt, beispielsweise auf eine Lebensdauer von acht Jahren oder mehr. Die Flexibilität der Schmelzleistung, also im Hinblick auf den Durchsatz/die Tonnage, lässt sich von für bisherige vollelektrische Glasschmelzwannen gültigen 70 - 100 % der Maximalleistung auf 45 - 100 % der Maximalleistung verbessern. Mit besonderem Vorteil kann der bisher für vollelektrische Glasschmelzwannen, insbesondere für Behälterglas, bekannte Scherbenanteil unter Beibehaltung eines stabilen Betriebs auch über 80 % erhöht werden.

Die beschriebenen Betrachtungen wurden dabei hauptsächlich für Kalk-Natron-Glas durchgeführt, lassen sich jedoch, gegebenenfalls mit leichten Modifikationen des Tiefe-zu-Höhe-Bereichs, selbstverständlich entsprechend auf andere Gläser übertragen, sodass die Erfindung auch beispielsweise auf Borosilikatgläser und andere Gläser mit Vorteil angewendet werden kann. Dies gilt im Vergleich zu den bekannten Glasschmelzwannen auch bezüglich der hier genannten und im weiteren noch diskutierten Größen und Größenverhältnisse.

Zu den durch die gezielte Wahl der Dimensionsverhältnisse gegebenen Vorteilen kommt noch der Vorteil der Verwendung von Rechteckwannen an sich, nachdem bezüglich der Breite des Prozessbereichs für das Glasbad, mithin auch die Breite der Glasschmelzwanne an sich, zunächst keine Begrenzung existiert, sodass die Glasschmelzwanne, worauf im Folgenden noch genauer eingegangen werden wird, bei weitgehend gleichbleibender hoher Qualität auf einfache Weise vergrößert werden kann, wobei die Stabilität des Prozesses weiterhin beherrscht wird. Insbesondere auch im Hinblick auf diese Erwägungen kann die erfindungsgemäße Glasschmelzwanne auf hohe Tonnagen ausgelegt werden, vorzugsweise für eine Tonnage von wenigstens 50 Tonnen pro Tag (tpd). Es sind also äußerst hohe Durchsätze mit den erfindungsgemäßen Glasschmelzwannen möglich, beispielsweise bis zu 400 tpd und mehr bei hoher Glasqualität. Wird dies im Kontext der gegebenen Flexibilität bezüglich des Durchsatzes kombiniert, können beispielsweise mit einer einzigen Glasschmelzwanne variierend hohe Durchsätze in Bereichen von beispielsweise 45 bis 100 tpd und/oder 180 bis 400 tpd realisiert werden.

Dabei kann im Rahmen der vorliegenden Erfindung letztlich eine Abwägung getroffen werden. Zwar kann davon ausgegangen werden, dass, je näher man dem Idealbereich, also insbesondere Tiefe zu Höhe von 1,3 : 1 bis 1,4 : 1, insbesondere 1,375 : 1, kommt, desto höher die Qualität des Glaserzeugnisses ist, welches dann beispielsweise auch Qualitätsanforderungen an das Produkt übertreffen kann. Auf der anderen Seite sind Tiefe beziehungsweise Höhe, worauf im Folgenden noch näher eingegangen werden wird, häufig technisch begrenzt, sodass zusätzlich gewünschte Tonnagen über die Breite bereitgestellt werden müssten, wo nicht in jedem Fall äußerst hohe Werte zweckmäßig erscheinen. Daher können, je nach konkreten Qualitätsanforderungen an das Glas, hervorragende und besonders vorteilhafte Kompromisse geschaffen werden.

So werden beispielsweise hervorragende Ergebnisse für die Qualität hinsichtlich der Qualitätsanforderungen bei der Produktion von beispielsweise Tableware, insbesondere Opalglas, erhalten, wenn ein Verhältnis der Tiefe des Prozessbereichs zur Höhe des Glasbads von 2,1 : 1 bis 2,3 : 1 gewählt wird. Für die Produktion von Containerglas, beispielsweise Flaschen für die Getränkeindustrie, hat sich ein Verhältnis von Tiefe des Prozessbereichs zu Höhe des Glasbads von 2,3 : 1 bis 2,6 : 1 als vorteilhaft und die Qualitätsanforderungen mehr als erfüllend erwiesen.

Während für die Produktion von Kosmetikglas, beispielsweise Flakons und dergleichen, die Qualitätsanforderungen bereits sehr gut bei einem Verhältnis der Tiefe zur Höhe des Prozessbereichs von 2,3 : 1 bis 2,0 : 1 erreicht werden, ergeben sich nochmals verbesserte Ergebnisse für die Qualität des Produkts bei hoher Stabilität der Prozessdurchführung, hoher Flexibilität das Durchsatzes und hohen möglichen Scherbenanteil im Gemenge bei Verhältnissen der Tiefe des Prozessbereichs zur Höhe des Prozessbereichs, also des Glasbads, von unter 2 : 1, beispielsweise im Bereich von 2,0 : 1 bis 1,5 : 1. Eine noch weitere Verbesserung der Qualität ist möglich, wenn das Verhältnis unter 1,5 : 1 verringert wird, wobei jedoch die Art der Einbringung der elektrischen Leistung in das Schmelzaggregat dann zu optimieren ist. Denn eine Wahl einer zu geringen Tiefe des Prozessbereichs kann zu kurzen Abständen zwischen den Elektroden des wenigstens einen Elektrodenpaares führen, sodass zu geringe Widerstände und zu hohe, unerwünschte Stromstärken auftreten können.

Zusammenfassend kann also gesagt werden, dass, insbesondere abhängig von der Qualitätsanforderung, bei der erfindungsgemäßen Glasschmelzwanne das Verhältnis der Tiefe zu der Höhe bei höchstens 2,6 : 1, insbesondere höchstens 2,0 : 1, vorzugsweise höchstens 1,5 : 1, liegen kann.

Allgemein gesagt kann hinsichtlich der Zuführung des Gemenges, also der Rohstoffe, auch bei der erfindungsgemäßen Glasschmelzwanne vorgesehen sein, dass das Gemenge von oben, beispielsweise über wenigstens ein Förderband, aufgegeben wird. Nach dem Abzug der Glasschmelze, also des Produkts, durch die wenigstens eine Auslassöffnung kann diese, wie grundsätzlich bekannt, auf verschiedene Art und Weise weiterverarbeitet werden, beispielsweise um bestimmte Formgebungen zu erreichen.

In zweckmäßiger Ausgestaltung kann vorgesehen sein, dass der Prozessbereich 50 bis 150 mm, insbesondere 100 mm, unterhalb des oberen Randes der Glasschmelzwanne endet. Die Höhe der Glasschmelzwanne selbst um den Prozessbereich wird häufig auch als Palisadenhöhe bezeichnet. Aus technischen Gründen sollte ein gewisser Höhenabstand zwischen der Höhe des Prozessbereichs für das Glasbad, also der Glasbadhöhe, und dieser Palisadenhöhe bestehen, bevorzugt von 100 mm.

Hinsichtlich der Höhe des Prozessbereichs hat es sich als zweckmäßig erwiesen, diese als höchstens drei Meter und/oder mindestens 1,9 Meter, bevorzugt also zwischen 1,9 und 3,0 Metern, zu wählen. Beträgt beispielsweise die Palisadenhöhe der Glasschmelzwanne drei Meter, kann die Glasbadhöhe 2,9 Meter betragen; bei auch oft eingesetzten Palisadenhöhen von zwei Metern kann die Glasbadhöhe des Prozessbereichs 1,9 Meter betragen.

Hinsichtlich der Tiefe des Prozessbereichs (und somit des Inneren der Glasschmelzwanne) kann vorgesehen sein, dass sie höchstens sechs Meter und/oder mindestens drei Meter beträgt. Bei Tiefen, die sechs Meter überschreiten, können ungewünschte Effekte hinsichtlich der Wärmeverteilung beim Beheizen durch die obere Elektronenanordnung sowie, insbesondere im Zusammenhing hiermit, Strömungsverläufe entstehen, die ungewünscht sind, beispielsweise Wirbel enthalten und/oder einen zu großen Durchlass in Randbereichen erlauben. Daher wird die Tiefe zweckmäßigerweise als höchstens sechs Meter gewählt. Nach unten hin kann die Tiefe auf drei Meter beschränkt sein, insbesondere, um eine zu nahe Anordnung von Elektroden eines sich gegenüberliegenden Elektrodenpaars zu vermeiden, somit insbesondere auch zu hohe Stromstärken und dergleichen. In Einzelfällen, insbesondere wenn kleine Verhältnisse zwischen der Tiefe und der Höhe angestrebt werden, kann es jedoch auch zweckmäßig sein, bei entsprechender Anpassung der Elektrodenanordnung und von deren Betrieb kleinere Tiefen zu wählen, wenn beispielsweise auch kleinere Höhen gefordert sind.

Hinsichtlich der Breite existieren aus Gesichtspunkten der Stabilität der Fahrweise, also des Prozesses, zunächst keine Beschränkungen, sodass letztlich beliebige Breiten gewählt werden können. In zweckmäßigen Ausgestaltungen kann die Breite in einem Bereich von 3 bis 30 Metern liegen, wobei jedoch auch höhere Breiten denkbar sind, beispielsweise bis zu 40 Metern oder mehr. Insbesondere zum Erreichen zweckmäßiger Tonnagen sind Breiten von mehr als 6 Metern, insbesondere mehr als 10 Metern, zweckmäßig.

In einer einfachen, weniger bevorzugten Ausgestaltung kann vorgesehen sein, dass das Verhältnis der Breite des Prozessbereichs zur Tiefe des Prozessbereichs zwischen 1 : 1 und 3 : 1 liegt, wobei es im Stand der Technik üblicherweise durch die Widerstandsverhältnisse in dem Glasbad und der Glasschmelzwanne sowie durch die Optimierung der Einbringung der elektrischen Leistung (Elektrodenpositionen) festgelegt war. Eine derartige Einschränkung kann jedoch auch umgangen werden, insbesondere, wenn mehrere Paare von Elektroden verwendet werden, wobei allgemein gesagt selbstverständlich auch verschiedene unterschiedliche Arten solcher Elektrodenpaare eingesetzt werden können, beispielsweise Zweifachelektroden oder Vierfachelektroden. Die Verwendung verschiedener Elektrodenpaare ermöglicht das Vorsehen entsprechend zugeordneter Abschnitte beziehungsweise Quadranten in Breitenrichtung.

So sieht eine besonders vorteilhafte Weiterbildung der vorliegenden Erfindung vor, dass die Glasschmelzwanne wenigstens einen durch wenigstens ein Paar von Elektroden der oberen Elektrodenanordnung definierten, das wenigstens eine Paar beinhaltenden, insbesondere modularen Breitenabschnitt umfasst. Auf diese Weise können Rechteckwannen wie die erfindungsgemäße Glasschmelzwanne bei weitgehend gleichbleibender hoher Qualität einfach vergrößert werden, während zudem bei Einhaltung der entsprechenden Verhältnisse von Tiefe des Prozessbereichs zur Höhe des Prozessbereichs der Prozess in seiner Stabilität beherrschbar bleibt. Beispielsweise können in Breitenrichtung weitere Breitenabschnitte angefügt werden, wobei das Verhältnis der Tiefe des Prozessbereichs zur Höhe des Prozessbereichs, also des Glasbads, beibehalten wird und sich auch die Widerstandsverhältnisse aufgrund der gleichen Ausgestaltung der breiten Abschnitte hinsichtlich der Elektroden nicht wesentlich ändern. Beispielsweise können wenigstens drei, insbesondere wenigstens fünf, in Breitenrichtung aufeinanderfolgende Breitenabschnitte von der Glasschmelzwanne umfasst sein. So kann beispielsweise der sinnvolle Arbeitsbereich von Glasschmelzwannen mit hohen Durchsätzen von beispielsweise 50 tpd auch auf über 400 tpd bei gleicher hoher Glasqualität und Stabilität des Prozesses erhöht werden. Insbesondere bei Verwenden einer großen Anzahl von Breitenabschnitten kann in diesem Zusammenhang vorgesehen sein, mehr als einen Auslass zum Abzug der Glasschmelze vorzusehen.

Die Elektroden der oberen Elektrodenanordnung können, wie im Stand der Technik grundsätzlich bekannt, auch im Rahmen der vorliegenden Erfindung mittels einer Schwenkeinrichtung aus dem Prozessbereich, mithin dem Glasbad, herausschwenkbar sein.

In einer zweckmäßigen Weiterbildung der vorliegenden Erfindung kann vorgesehen sein, dass die Glasschmelzwanne zusätzlich zu der oberen Elektrodenanordnung ferner eine bodenseitige und/oder laterale, auf den unteren Anteil des Prozessbereichs wirkende, untere Elektrodenanordnung aufweist. Auch bei der vorliegenden Erfindung kann also die Beheizung in einer solchen Ausgestaltung zumindest zeitweise und/oder teilweise auch über wenigstens eine weitere, untere Elektrodenanordnung erfolgen, beispielsweise umfassend Boden- und/oder Horizontalelektroden. Die Kombination und die Leistungsverteilung der verschiedenen zur Heizung eingesetzten Elektrodenanordnungen kann von verschiedenen Parametern wie der Viskosität des Glases abhängig gemacht werden und auch der Höhe des Glasbades, also des Prozessbereichs, angepasst sein. Beispielsweise können zusätzlich untere Elektrodenanordnungen auch während der Inbetriebnahme eingesetzt werden, beispielsweise zum Vorbereiten einer ersten Glasschmelze von unten her, während beim kontinuierlichen Dauerbetrieb, wenn die Gemengedeckschicht gebildet ist, die Beheizung hauptsächlich oder sogar ausschließlich über die obere Elektrodenanordnung erfolgen kann.

Weitere Vorteile und Einzelheiten ergeben sich aus den im Folgenden beschriebenen Ausführungsbeispielen sowie anhand der Zeichnungen. Dabei zeigen:
- Fig. 1: eine prinzipielle Querschnittsansicht einer erfindungsgemäßen Glasschmelzwanne,
- Fig. 2: eine prinzipielle Aufsicht auf eine erfindungsgemäße Glasschmelzwanne,
- Fig. 3: eine Prinzipskizze zur Erläuterung von Strömungsverhältnissen in der Glasschmelzwanne,
- Fig. 4: eine Prinzipskizze einer drei Breitenabschnitte aufweisenden Glasschmelzwanne, und
- Fig. 5: eine Prinzipskizze einer fünf Breitenabschnitte aufweisenden Glasschmelzwanne.

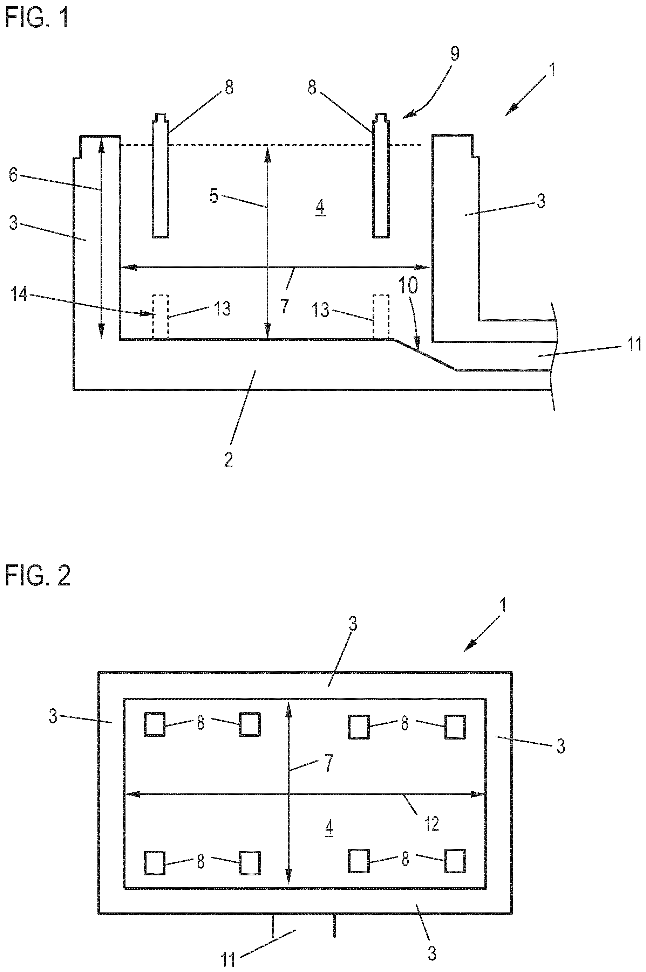

Fig. 1 zeigt eine prinzipielle Querschnittsansicht einer erfindungsgemäßen Glasschmelzwanne 1, bei der durch einen Boden 2 und laterale Wände 3 in deren Inneren ein Prozessbereich 4 für ein Glasbad gebildet ist, dessen Höhe 5 etwas niedriger, beispielsweise 50 bis 150 mm niedriger, als die Palisadenhöhe 6 der Wand 3 ist. Bevorzugt ist die Höhe 5 des Prozessbereichs 4 100 mm niedriger als die Palisadenhöhe 6. Der Prozessbereich 4 weist zudem eine Tiefe 7 auf, die sich in Fig. 1 in Querrichtung erstreckt. In Tiefenrichtung ragen in den Prozessbereich 5 von oben Elektroden 8 eines Elektrodenpaares einer oberen Elektrodenanordnung 9 in den Prozessbereich 4, mithin im Betrieb das Glasbad, ein. Über eine Verschwenkeinrichtung können die Elektroden 8 auch aus dem Prozessbereich 4 beziehungsweise dem Glasbad herausgeschwenkt werden. Die Elektroden 8 liegen sich entlang der Tiefenrichtung der Tiefe 7 gegenüber im Bereich der Wände 3 und dienen bei entsprechender gegensätzlicher Polung dem Erzeugen eines Stromflusses durch das Glasbad und damit dessen Beheizung. Sie wirken dabei auf einen oberen Anteil des Prozessbereichs 4. Mittels einer Auslassöffnung 10 kann Glasschmelze beziehungsweise flüssiges Glas aus dem unteren Anteil des Prozessbereichs 4 in einen entsprechenden Führungskanal 11 abgezogen werden.

Fig. 2 zeigt eine Aufsicht auf die Glasschmelzwanne 1, in der ebenso die Tiefe 7 und zusätzlich die Breite 12 des Prozessbereichs 4 zu erkennen sind. Im vorliegenden Beispiel werden vier Elektrodenpaare, mithin acht Elektroden 8, der oberen Elektrodenanordnung 9 verwendet. Wie in Fig. 1 im unteren Anteil des Prozessbereichs 4 noch angedeutet ist, können optional auch weitere Elektroden 13 einer unteren Elektrodenanordnung 14 vorgesehen werden, die beispielsweise vom Boden 2 oder von den lateralen Wänden 3 einragen können.

Bei der Glasschmelzwanne 1 ist ein Verhältnis der Tiefe 7 des Prozessbereichs 4 zu der Höhe 5 des Prozessbereichs 4 im Intervall von 1,2 : 1 bis 3 : 1 gegeben. Vorliegend ist ein Verhältnis unterhalb von 2,0 : 1, insbesondere etwa 1,5 : 1, gezeigt.

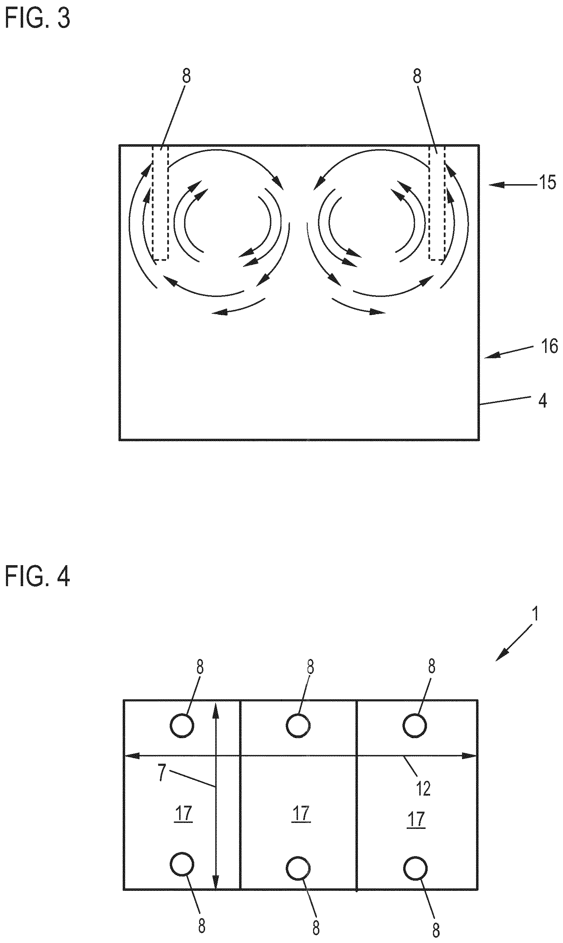

Derartige Verhältnisse der Tiefe 7 zur Höhe 5 haben einen stabilen Prozessablauf bei hoher Qualität des produzierten Glases zur Folge. Insbesondere, wie in Fig. 3 schematisch erläutert ist, liegt die aufgrund des Betriebs der Elektroden 8 entstehende Strömung, welche insbesondere durch Konvektion entsteht, hauptsächlich im oberen Anteil 15 des Prozessbereichs 4, während sich im unteren Anteil 16 eine Beruhigung einstellt, was positive Auswirkungen auf die Läuterung hat. Auch lässt sich die Temperatur in der Glasschmelzwanne 1, insbesondere im unteren Anteil 16 des Prozessbereichs 4, absenken. Dies führt zu einer Verminderung der Korrosion, einer Erhöhung der Flexibilität des Durchsatzes (Schmelzleistung) und einer Erhöhung des möglichen Scherbenanteils.

Die Höhe 5 liegt dabei bevorzugt in einem Bereich zwischen 1,9 bis 3,0 Metern, insbesondere 2,8 bis 3,0 Metern. Die Tiefe liegt bevorzugt in einem Bereich 3 bis 6 Metern, beispielsweise 4,5 bis 6,0 Metern. Tatsächlich zeigt sich, dass mit steigenden Qualitätsanforderungen niedrigere Verhältnisse von Tiefe 7 zu Höhe 5 zweckmäßiger werden, sodass beispielsweise für Tableware und Behälterglas/Containerglas schon bei Verhältnissen von 2,0 : 1 bis 2,5 : 1 oder 2,6 : 1 die Qualitätsanforderungen übersteigende Glasqualitäten erhalten werden, während für manche Anwendungsfälle, beispielsweise Kosmetikglas, das Verhältnis näher zu einem Optimum im Bereich von 1,3 : 1 bis 1,4 : 1 gewählt werden kann, beispielsweise zwischen 1,5 : 1 und 2,0 : 1 oder sogar unter 1,5 : 1.

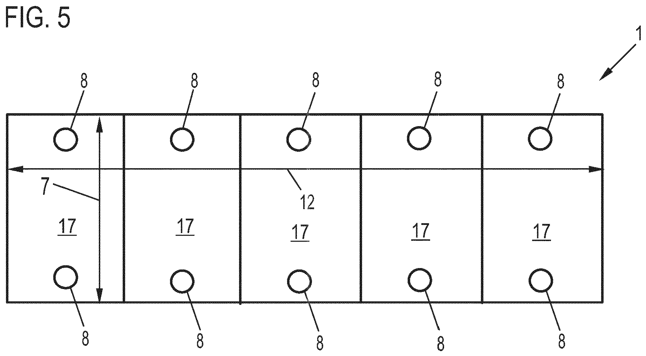

Die Breite 12 hingegen ist relativ frei skalierbar, sodass trotz technischen Beschränkungen bei der Höhe 5 und der Tiefe 7 Glasschmelzwannen 1 mit hohen Tonnagen, beispielsweise bis zu 400 tpd oder sogar mehr, erreicht werden können. Dies ist insbesondere bei Ausgestaltungen, wie sie in Fig. 4 und Fig. 5 gezeigt sind, möglich, in denen die Glasschmelzwanne 1 in modulare Breitenabschnitte 17 aufgeteilt ist, denen jeweils ein Elektrodenpaar 8 zugeordnet ist. Durch Hinzufügen weiterer Breitenabschnitte 17, beispielsweise von drei in Fig. 3 zu fünf in Fig. 5, kann die Tonnage bei zumindest im Wesentlichen gleichbleibender Glasqualität und Stabilität des Prozesses erhöht werden. Wird beispielsweise bei einer Tiefe 7 von 6,0 Metern und einer Breite 12 von 14,3 Metern bei drei Breitenabschnitten 17 eine Tonnage von 240 tpd erreicht, kann bei Verwendung von fünf Breitenabschnitten 17 (und einer Ausdehnung von 6 mal 23,4 Metern) eine Tonnage von 400 tpd erreicht werden.

Im Folgenden sollen einige Beispiele für konkrete Dimensionierungen von erfindungsgemäßen Glasschmelzwannen 1 beispielhaft dargestellt werden. Beispielsweise für eine Glasschmelzwanne 1, die für eine Tonnage von 80 tpd ausgelegt werden soll, kann bei einer Höhe 5 des Prozessbereichs 4 von 2,5 Metern eine Tiefe 7 von 3,8 Metern und eine Breite 12 von 7,6 Metern verwendet werden, um ein Tiefe-zu-Breite-Verhältnis von 1,52 zu erhalten. Auch ist eine Auslegung mit einer Tiefe 7 von 3,45 Metern, einer Breite 12 von 8,4 Metern denkbar, wobei sich ein Tiefe-zu-Höhe-Verhältnis von 1,38 ergibt. Bei einer Glasschmelzwanne 1 für eine Tonnage von 90 tpd kann beispielsweise eine Tiefe 7 von 4,0 Metern bei einer Höhe 5 von 1,9 Metern und einer Breite 12 von 8,0 Metern zu einem Tiefe-zu-Höhe-Verhältnis von 2,1 führen; bei einer Höhe 5 von 2,5 Metern, einer Tiefe 7 von 4,0 Metern und einer Breite 12 von 9,0 Metern ergibt sich ein Tiefe-zu-Höhe-Verhältnis von 1,74. Ein Tiefe-zu-Höhe-Verhältnis von 1,38 ergibt sich bei einer Höhe 5 von 2,5 Metern, einer Tiefe 7 von 3,45 Metern und einer Breite 12 von 9,3 Metern.

Auch für größere Tonnagen ergeben sich mögliche konkrete Ausführungsbeispiele. Beispielsweise kann bei einer Tiefe 7 von 5,75 Metern und einer Höhe 5 von 2,5 Metern, also einem Tiefe-zu-Höhe-Verhältnis von 2,3 : 1, eine Breite 12 von 14,9 Metern vorgesehen werden, um Tonnagen von 240 tpd zu erreichen. Wurden hier drei Breitenabschnitte 17 verwendet und werden stattdessen fünf Breitenabschnitte 17 verwendet, ergibt sich beispielsweise eine Tonnage von 400 tpd. Auch können bei Tiefen 7 von 3,5 Metern und Höhen 5 von 2,5 Metern, also einem Verhältnis von 1,4 : 1, über Breitenabschnitte 17 modular hohe Tonnagen erreicht werden, beispielsweise bei drei Breitenabschnitten 17 185 tpd und bei neun Breitenabschnitten 17 beispielsweise 400 tpd, auch wenn dann hohe Breiten 12 von um die 40 Meter auftreten können.

Dabei ist anzumerken, dass insbesondere im Fall einer großen Zahl von Breitenabschnitten 17, beispielsweise neun Breitenabschnitten 17, auch mehrere Auslassöffnungen 10 vorgesehen werden können.

## Patentansprüche

1. Glasschmelzwanne (1) zum vollelektrischen Betrieb, aufweisend
- einen Prozessbereich (4) für ein Glasbad, welcher einen rechteckigen, durch eine Breite (12) und eine Tiefe (7) gekennzeichneten Querschnitt in der Horizontalen und eine Höhe (5), bis zu der das Glasbad vorgesehen ist, aufweist,
- eine insbesondere von oben in den Prozessbereich (4) einragende, in einem oberen Anteil (15) des Prozessbereichs (4) wirkende obere Elektrodenanordnung (9) mit wenigstens einem Paar von sich in Tiefenrichtung gegenüberliegenden Elektroden (8), und
- eine in einem unteren Anteil (16) des Prozessbereichs (4), der zur Läuterung und Homogenisierung wirkt, vorgesehene Auslassöffnung (10) zum Abzug einer homogenisierten Glasschmelze,
- wobei das Verhältnis der Tiefe (7) des Prozessbereichs (4) zu der Höhe (5) des Prozessbereichs (4) im Bereich von 1,2 : 1 bis 3 : 1 liegt.

2. Glasschmelzwanne (1) nach Anspruch 1, **dadurch gekennzeichnet, dass** sie für eine Tonnage von wenigstens 50 Tonnen/Tag und/oder eine Verwendung für Kalk-Natron-Glas ausgelegt ist.

3. Glasschmelzwanne (1) nach Anspruch 1 oder 2, **dadurch gekennzeichnet, dass** das Verhältnis der Tiefe (7) zu der Höhe (5) bei höchstens 2,6 : 1, insbesondere höchstens 2 : 1, insbesondere höchstens 1,5 : 1, liegt.

4. Glasschmelzwanne (1) nach einem der vorangehenden Ansprüche, **dadurch gekennzeichnet, dass** der Prozessbereich (4) 50 bis 150 mm, insbesondere 100mm, unterhalb des oberen Randes der Glasschmelzwanne (1) endet und/oder die Höhe (5) höchstens 3 Meter und/oder mindestens 1,9 Meter beträgt.

5. Glasschmelzwanne (1) nach einem der vorangehenden Ansprüche, **dadurch gekennzeichnet, dass** die Tiefe (7) höchstens 6 Meter und/oder mindestens 3 Meter beträgt.

6. Glasschmelzwanne (1) nach einem der vorangehenden Ansprüche, **dadurch gekennzeichnet, dass** die Breite (12) in einem Bereich von 3 bis 30 Meter liegt.

7. Glasschmelzwanne (1) nach einem der vorangehenden Ansprüche, **dadurch gekennzeichnet, dass** sie wenigstens einen durch wenigstens ein Paar von Elektroden (8) der oberen Elektrodenanordnung (9) definierten, das wenigstens eine Paar beinhaltenden, insbesondere modularen Breitenabschnitt (17) umfasst.

8. Glasschmelzwanne (1) nach Anspruch 7, **dadurch gekennzeichnet, dass** sie wenigstens drei, insbesondere wenigstens fünf, in Breitenrichtung aufeinanderfolgende Breitenabschnitte (17) umfasst.

9. Glasschmelzwanne (1) nach einem der vorangehenden Ansprüche, **dadurch gekennzeichnet, dass** die Elektroden (8) der oberen Elektrodenanordnung (9) mittels einer Schwenkeinrichtung aus dem Prozessbereich (4) ausschwenkbar sind.

10. Glasschmelzwanne (1) nach einem der vorangehenden Ansprüche, **dadurch gekennzeichnet, dass** sie ferner eine bodenseitige und/oder laterale, auf den unteren Anteil (16) des Prozessbereichs (4) wirkende, untere Elektrodenanordnung (14) aufweist.

## Claims

1. Glass-melting tank (1) for fully electrical operation, having
- a process region (4) for a glass bath, which process region has a rectangular cross-section, **characterized by** a width (12) and a depth (7), in a horizontal plane and has a height (5) up to which the glass bath is provided,
- an upper electrode arrangement (9) with at least one pair of electrodes (8) situated opposite one another in the depth direction, which upper electrode arrangement projects in particular from above into the process region (4) and acts in an upper part (15) of the process region (4), and
- an outlet opening (10) which is provided in a lower part (16) of the process region (4), serving for fining and homogenization, and is used for withdrawal of a homogenized glass melt,
- wherein the ratio of the depth (7) of the process region (4) to the height (5) of the process region (4) is in the range of 1.2: 1 to 3: 1.

2. Glass-melting tank (1) according to Claim 1, **characterized in that** said glass-melting tank is designed for a tonnage of at least 50 tonnes/day and/or for a use for soda-lime glass.

3. Glass-melting tank (1) according to Claim 1 or 2, **characterized in that** the ratio of the depth (7) to the height (5) is at most 2.6: 1, in particular at most 2: 1, in particular at most 1.5: 1.

4. Glass-melting tank (1) according to one of the preceding claims, **characterized in that** the process region (4) ends 50 to 150 mm, in particular 100 mm, below the upper edge of the glass-melting tank (1) and/or the height (5) is at most 3 metres and/or at least 1.9 metres.

5. Glass-melting tank (1) according to one of the preceding claims, **characterized in that** the depth (7) is at most 6 metres and/or at least 3 metres.

6. Glass-melting tank (1) according to one of the preceding claims, **characterized in that** the width (12) is in a range of 3 to 30 metres.

7. Glass-melting tank (1) according to one of the preceding claims, **characterized in that** said glass-melting tank comprises at least one in particular modular width section (17) defined by at least one pair of electrodes (8) of the upper electrode arrangement (9) and containing the at least one pair.

8. Glass-melting tank (1) according to Claim 7, **characterized in that** said glass-melting tank comprises at least three, in particular at least five, width sections (17) following one another in the width direction.

9. Glass-melting tank (1) according to one of the preceding claims, **characterized in that** the electrodes (8) of the upper electrode arrangement (9) are able to be pivoted out of the process region (4) by means of a pivoting device.

10. Glass-melting tank (1) according to one of the preceding claims, **characterized in that** said glass-melting tank further has a bottom-side and/or lateral lower electrode arrangement (14) acting on the lower part (16) of the process region (4).

## Revendications

1. Cuve de fusion de verre (1) pour fonctionnement tout électrique, comportant
- une zone de processus (4) destinée à un bain de verre présentant une section transversale rectangulaire **caractérisée par** une largeur (12) et une profondeur (7) à l'horizontale et une hauteur (5) jusqu'à laquelle le bain de verre est prévu,
- un ensemble supérieur d'électrodes (9), en particulier pénétrant depuis le haut dans la zone de processus (4) et agissant dans une partie supérieure (15) de la zone de processus (4), comprenant au moins une paire d'électrodes opposées dans la direction de la profondeur (8), et
- un orifice de sortie (10) prévu dans une partie inférieure (16) de la zone de processus (4), qui produit une purification et une homogénéisation, permettant l'extraction d'une masse fondue de verre homogénéisée,
- le rapport de la profondeur (7) de la zone de processus (4) à la hauteur (5) de la zone de processus (4) se situant dans la plage de 1,2: 1 à 3: 1.

2. Cuve de fusion de verre (1) selon la revendication 1, **caractérisée en ce qu'**elle est conçue pour un tonnage d'au moins 50 tonnes/jour et/ou pour un usage pour verre sodocalcique.

3. Cuve de fusion de verre (1) selon la revendication 1 ou 2, **caractérisée en ce que** le rapport de la profondeur (7) à la hauteur (5) est au plus de 2,6: 1, en particulier au plus de 2: 1, en particulier au plus de 1,5: 1.

4. Cuve de fusion de verre (1) selon l'une des revendications précédentes, **caractérisée en ce que** la zone de processus (4) se termine à 50 à 150 mm, en particulier à 100 mm, du bord supérieur de la cuve de fusion de verre (1) et/ou **en ce que** que la hauteur (5) est au plus de 3 mètres et/ou au moins de 1,9 mètres .

5. Cuve de fusion du verre (1) selon l'une des revendications précédentes, **caractérisée en ce que** la profondeur (7) est au plus de 6 mètres et/ou au moins de 3 mètres.

6. Cuve de fusion de verre (1) selon l'une des revendications précédentes, **caractérisée en ce que** la largeur (12) se situe dans une plage de 3 à 30 mètres.

7. Cuve de fusion de verre (1) selon l'une des revendications précédentes, **caractérisée en ce qu'**elle comprend au moins une section de largeur (17), en particulier modulaire, qui est définie par au moins une paire d'électrodes (8) de l'ensemble supérieur d'électrodes (9) et qui contient ladite au moins une paire.

8. Cuve de fusion de verre (1) selon la revendication 7, **caractérisée en ce qu'**elle comprend au moins trois, en particulier au moins cinq, sections de largeur (17) successives dans la direction de la largeur.

9. Cuve de fusion de verre (1) selon l'une des revendications précédentes, **caractérisée en ce que** les électrodes (8) de l'ensemble supérieur d'électrodes (9) peuvent être amenées à pivoter hors de la zone de processus (4) au moyen d'un dispositif de pivotement.

10. Cuve de fusion de verre (1) selon l'une des revendications précédentes, **caractérisée en ce qu'**elle comporte en outre un ensemble inférieur d'électrodes côté sol et/ou latéral agissant sur la partie inférieure (16) de la zone de processus (4) (14).
